Europäisches Patentamt

(19) European Patent Office

Office européen des brevets

(11) Publication number: **0 001 448**
A1

(12) # EUROPEAN PATENT APPLICATION

(21) Application number: **78101070.7**

(22) Date of filing: **05.10.78**

(51) Int. Cl.²: **B 01 D 3/22,** B 01 D 3/20

---

(30) Priority: **05.10.77 US 839558**

(43) Date of publication of application: **18.04.79**
**Bulletin 79/8**

(84) Designated Contracting States: **BE DE FR GB NL**

(71) Applicant: **UNION CARBIDE CORPORATION, 270, Park Avenue, New York,N.Y. 10017 (US)**

(72) Inventor: **Brukert, Walter, Beukenlaan, 10, B-2000 Antwerpen (BE)**

(74) Representative: **Schwan, Gerhard, Dipl.-Ing,, Elfenstrasse 32, D-8000 München 83 (DE)**

---

(54) **Vapor-liquid contacting tray.**

(57) A vapor-liquid contacting tray having downcomer means (10) arranged to discharge liquid onto liquid impingement area portions (30) of the horizontal part (12) main top surface of an underlying tray in a contacting column. A plurality of slot means (31) is distributed across the liquid impingement area portions (30) of the tray horizontal part (12) main top surface to provide vapor flow for prevention of weeping of impinging liquid, discharged for downcomer means (10) in an overlying tray, through fixed size openings in the liquid impingement area portions of the tray horizontal part (12).

11448

# VAPOR-LIQUID CONTACTING TRAY

## BACKGROUND OF THE INVENTION

### Field of the Invention

This invention relates to means for preventing weeping in a vapor-liquid contacting tray having downcomer means arranged to discharge liquid onto an underlying tray in a contacting column.

### Description of the Prior Art

U. S. Patent No. 3,410,540 to W. Bruckert discloses a vapor-liquid contacting tray of a type adapted for mounting in a vapor-liquid contacting column wherein a plurality of such trays are vertically spaced apart from one another. The disclosed tray is suitable for use in contacting systems such as wash columns, stripping columns, distillation columns and the like. In this type of tray, a perforated horizontally disposed part of the tray is provided as the active portion of the tray surface area, and narrow trough-like downcomers are spaced across the tray to transfer liquid to the next lower tray in the column, the downcomers thereby serving to provide separate perforated sections of the horizontal part therebetween.

In more specific detail, the Bruckert multiple downcomer tray includes a perforated horizontal part providing an active major portion of the tray surface area to support a two-phase fluid dispersion of vapor in liquid for mass exchange, and at least three narrow, trough-like

- 1 -

downcomer means evenly spaced across the tray in parallel relation to each other and extending through the perforated horizontal part as the sole liquid transfer means and comprising a minor portion of the tray surface area such that the horizontal part is divided into sections of substantially equal surface area per unit length of adjacent downcomer means. Each downcomer means comprises two spaced longitudinal inlet edges each adjacent to a section of the active portion (perforated horizontal part) and extending across the tray and imperforate relatively long and deep longitudinal side walk and imperforate relatively short transverse end walls which define a discrete inactive portion of the tray surface area, provide an inlet end section for receiving a fraction of the two-phase fluid dispersion and permitting vapor to disengage therefrom, and provide an outlet section for collecting disengaged liquid and discharging such disengaged liquid from the tray. Each downcomer means also comprises a liquid sealable outlet means which may suitably be constituted by a horizontally extending floor member attached to the outlet end section of the downcomer, having a multiplicity of longitudinally spaced spout openings (apertures) therein so constructed that a sealing effect against vapor penetration may be provided by a stable head loss of liquid passing therethrough such that a pool of disengaged liquid may be maintained in the downcomer means.

- 2 -

11448

The above-described Bruckert multiple downcomer tray has been proven to be highly efficient and is widely used in practice as a result of its numerous desirable operating characteristics. The tray is capable of operating efficiently at high liquid flow rates without the problems of excessive entrainment, downcomer flooding, hydrostatic head gradient, or high pressure drop. On the Bruckert tray, froth height (the height of the two-phase fluid dispersion of vapor and liquid on the active area of the tray surface) is controllable over wide liquid and vapor flow rates, thereby permitting high rangeability of the gas-liquid contacting system and reasonable vapor phase pressure drop. Furthermore, the hydraulic behavior of the Bruckert tray is accurately predictable. As a result of these operating characteristics, the Bruckert tray may be employed in a vapor-liquid contacting column having tray spacings, i.e., the vertical distance between adjacent contacting trays in the column, lower than is possible for other conventional trays such as those of the cross-flow or corrugated types. In this manner, the Bruckert trays provide more mass transfer capacity per unit column volume with lower power consumption than contacting columns containing such other conventional trays.

Despite the foregoing advantages, however, it has been observed that Bruckert multiple downcomer trays in operation are subject to the disadvantageous phenomenon of penetrative weeping. Penetrative weeping is caused by the

- 3 -

impact of the liquid flowing from the downcomers of one tray in a contacting column onto the active portion of the tray surface area of the underlying tray. The momentum gained by the liquid in its fall adds to the hydrostatic head of the froth on the active portion of tray surface area of the underlying tray, thus producing a localized area of weeping. Weeping involves liquid flow through the gas flow openings of the active portion of tray surface area, in place of the vapor which would otherwise flow through such gas flow openings. Since weeping is synonomous with reduced vapor flow, the vapor that is prevented from passing through the penetrative weeping zone must pass through another part of the tray surface area, thereby creating increased superficial vapor velocities in these other zones. In addition, any liquid which weeps through the tray surface area active portion is not available to contribute to froth height on the tray surface. All of these factors lead to reduced efficiency, higher pressure drop, higher entrainment and reduced flooding limits of operability for the tray.

In addition to the above-described disadvantageous phenomenon of penetrative weeping, it has also been found that the Bruckert multiple downcomer tray is in some applications subject to the occurrence of liquid maldistribution on the active area of the tray surface. In applications where the Bruckert multiple downcomer tray has a

- 4 -

0001448

11448

large diameter and is characterized by large spacing distances between adjacent parallel downcomers, liquid discharged from the downcomers of an overlying tray and impinging on the active surface of the tray tends to flow
by the shortest distance to the downcomer of the tray,
leaving other active surface area regions relatively
stagnant. The rising vapor contacting liquid on the area
of the tray surface must therefore contact liquid of varying "age". It is easily verified both theoretically and
experimentally that such maldistribution of liquid and re-
sulting nonuniformity of vapor-liquid contacting inevitably
leads to a reduction in tray efficiency. It has been proposed to overcome such liquid maldistribution problem by
the provision of vertically upwardly extending guide wall
members disposed on the main top surface of the tray
horizontal part, to direct the flow of liquid
on the main top surface of the tray and thereby avoid liquid maldistribution thereon. Such provision,
while effective in overcoming the liquid maldistribution
problem, unfortunately exacerbates the aforementioned
penetrative weeping phenomenon. This is due to the fact
that such guide wall members tend to increase the fluid
residence time of the liquid on the tray surface active
area, so that greater opportunity exists for liquid to pass
through the perforations in the tray horizontal part,
particularly in _____

- 5 -

0001448

the discharged liquid impact area of the tray's active
area.

Accordingly, it is an object of the present invention to provide an improved vapor-liquid contacting
tray which is resistant to liquid penetrative weeping.

It is another object of the invention to provide
an improved vapor-liquid contacting tray of the multiple
downcomer type.

It is still another object of the invention to
provide an improved vapor-liquid contacting tray of the
multiple downcomer type having vertically upwardly extending guide wall members disposed on the main
top surface of the tray horizontal part to direct the
flow of liquid on the main flat top surface and avoid
liquid maldistribution thereon, which is resistant to
liquid penetrative weeping.

Other objects and advantages of the invention
will be apparent from the ensuing disclosure and the
appended claims.

### SUMMARY OF THE INVENTION

This invention relates to a vapor-liquid contacting tray  of a type employed in a contacting column
wherein a plurality of such trays are vertically spaced
apart from one another.

Briefly, the invention relates to a vapor-liquid

- 6 -

contacting tray for effecting contact between a rising vapor and liquid flowing across a horizontally disposed part of the tray to liquid downcomer means extending through such horizontal part. The horizontal part has main top and bottom surfaces with a plurality of openings distributed across the surfaces and extending through the horizontal part for vapor flow therethrough. The downcomer means are arranged to discharge liquid onto liquid impingement area portions of the horizontal part main top surface of an underlying tray in the contacting column.

In the improvement of the invention, a plurality of slot means is distributed across the liquid impingement area portions of the tray horizontal part main top surface to provide vapor flow for prevention of weeping of impinging liquid, discharged from downcomer means of an overlying tray, through the openings in the liquid impingement area portions of the tray horizontal part. Each such slot means substantially overlies a fixed size opening through the horizontal part and has a top surface raised from the main top surface, with at least two spaced apart edge sections of the raised top surface separated from the main top surface each forming a slot opening therewith and side wall means bounding the slot openings and joining the top surface of the slot means to the tray horizontal part main top surface,_____

- 7 -

such that the raised top surface and side wall means together bridge the overlaid fixed size opening through the
horizontal part and provide flow communication for
vapor flow from the overlaid fixed size opening through the
slot openings of the slot means, whereby liquid discharged
from the downcomer means of an overlying tray in the contacting column and impinging onto the liquid impingement area
portions of the tray horizontal part main top surface is imparted with horizontally directed vapor thrust by vapor issuing from the slot openings of the slot means, to prevent
weeping of liquid through the fixed size openings in the
liquid impingement area portions of the tray horizontal part.

In a preferred embodiment of the present invention, the above-described slot means are employed in  a
multiple downcomer vapor-liquid contacting tray of the
type disclosed in U.S. Patent No. 3,410,540 to W. Bruckert.

## BRIEF DESCRIPTION OF THE DRAWINGS

Figure 1 is a perspective view of a multiple
downcomer vapor-liquid contacting tray according to the
prior art.

Figure 2 is sectional view in elevation of a
portion of a vapor-liquid contacting column showing the
penetrative weeping effects which are overcome by the
means of the present invention.

Figure 3 is a plan   view of two superimposed trays constructed in accordance with the present invention illustrating an exemplary relative arrangement of such trays in a vapor-liquid contacting column.

Figure 4 is a perspective view of a slot means such as employed in the Figure 3 contacting trays, constructed in accordance with the present invention.

Figure 5 is a cross-sectional view in elevation of the slot means of Figure 4.

Figure 6 is a perspective view of another slot means constructed in accordance with the present invention.

Figure 7 is a plan view of a portion of a plate member of a tray constructed in accordance with the present invention, utilizing the slot means such as shown in Figure 6.

Figure 8 is a plan view of a vapor-liquid contacting tray constructed in accordance with the present invention, utilizing a plurality of vertically upwardly extending guide wall members joined at a lower edge to the main top surface of the horizontal part of the contacting tray.

DETAILED DESCRIPTION OF THE PREFERRED EMBODIMENTS

In the following description, the length of the downcomer means of a multiple downcomer tray refers to the horizontal dimension normal to the direction of liquid flow approaching the downcomer. The width of each downcomer means of a multiple downcomer tray refers to the dimension

11448

of the downcomer means inlet parallel to the direction of the approaching liquid.

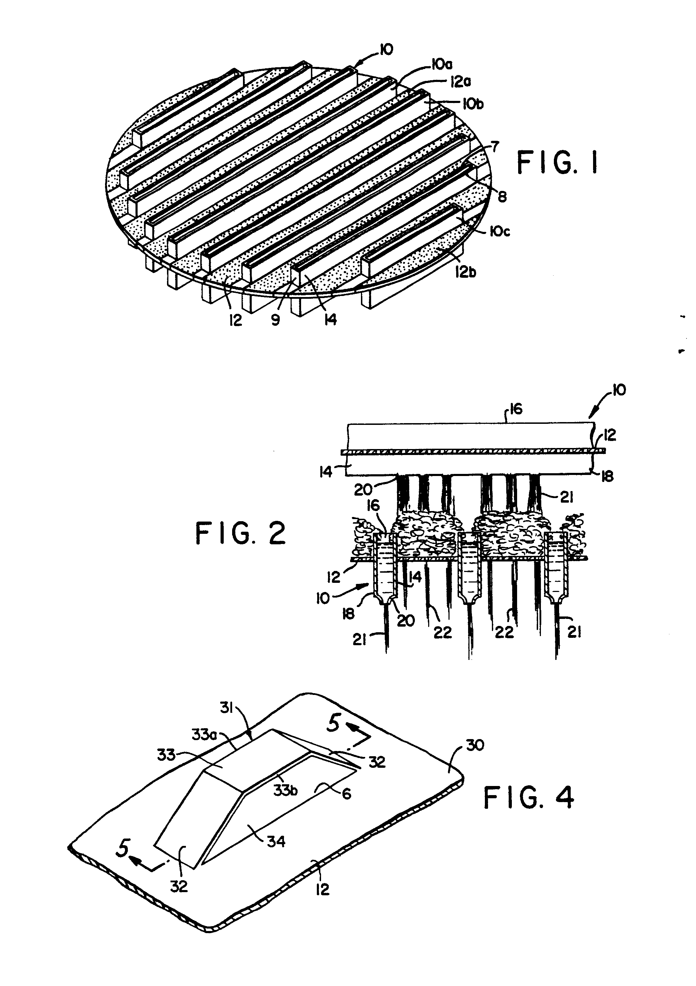

Referring now to the drawings, Figure 1 shows a vapor-liquid contacting tray of the type disclosed and claimed in Bruckert, U. S. Patent No. 3,510,540, incorporated herein·to the extent pertinent. The tray features multiple, narrow, trough-like downcomer means 10 which are evenly spaced across the distillation tray surface and ex-extend through a horizontal part 12 of the tray such that the horizontal part contacting means is divided into sections of substantially equal surface area per unit length of adjacent downcomer means. Thus, by way of example, the ratio of the surface area of the section 12a of the perforated horizontal part 12 of Figure 1 to the combined length of the adjacent downcomer means 10a and 10b is substantially equal to the ratio of the surface area of the section 12b to the length of the adjacent downcomer means 10c. To provide the necessary equality of surface areas per unit length of adjacent downcomer means, at least three and preferably more such downcomer means are provided, equispaced across the tray surface as shown in Figure 1.

The vapor-liquid contacting tray of Figure 1 effects contact between a rising vapor and liquid flowing across the horizontally disposed part of the tray to liquid downcomer means. The horizontal part has main

- 10 -

11448

top and bottom surfaces with a plurality of fixed size openings distributed across the surfaces and extending through the horizontal part for vapor flow therethrough. Each downcomer means comprises two spaced longitudinal inlet edges 7, 8 each adjacent to a section of the active portion of the tray surface and extending across the tray. These longitudinal inlet edges are associated with imperforate relatively long and deep longitudinal side walls 14 and imperforate relatively short transverse end walls 9 which provide a discrete inactive portion of the tray surface area, provide an upper inlet end section for receiving a fraction of a two-phase fluid dispersion and permitting vapor to disengage therefrom, and provide a lower outlet end section for collecting disengaged liquid and discharging such disengaged liquid from the tray. Each downcomer means further comprises a horizontally extending floor member attached to the outlet end section of the downcomer having a multiplicity of longitudinally spaced spout openings therein so constructed that a sealing effect against vapor penetration may be provided by a stable head loss of liquid passing therethrough such that a pool of disengaged liquid may be maintained in the downcomer means. The tray thus comprises precisely defined areas for vapor flow upward through the perforated horizontal part 12 and precisely defined areas for liquid flow downward through

11448

the multiple downcomer means 10.

By disengaged liquid is meant liquid which is freed of a substantial portion of the vapor in the original froth, so that the apparent density of the disengaged liquid is substantially higher than the froth on the active tray surface. The apparent density of two-phase fluids may be expressed as the volume fraction of liquid it contains. Thus, the apparent density of active froth, referred to that of clear liquid, may be only 30% whereas the apparent density of disengaged liquid in the downcomer should preferably be above 60%. In a properly functioning downcomer, the disengaged liquid acts as a homogeneous fluid and any residual vapor content not released in the disengagement section is swept downward with liquid through the downcomer end section. As shown in Figure 1, the multiple downcomers 10 are positioned parallel to one another across the tray surface. Each downcomer extends substantially from one edge of the tray to an opposite edge along the respective chord of the tray defined by the downcomer. These multiple narrow, trough-like downcomers have been discovered to be capable of handling far more fluid for the area they occupy than other prior art downcomers.

High vapor capacity at low tray spacing and small contacting column diameter becomes practical with multiple downcomer trays.

11448

as a result of their ability to control the
froth height at a low, uniform level. Low uniform
froth height is obtained by means of the long overflow
inlet associated with the plurality of downcomer means
spaced and distributed across the tray area. The amount
of tray area serviced by each unit length of downcomer inlet is small, and consequently the crest of froth flowing
over the inlet is very low. Since the total crest height
is low, the variation in crest height attendant changes
in liquid and vapor flow rates is greatly reduced as compared with the inlets of other prior art downcomers. The
side walls 14 of the multiple downcomer means are usually
extended upward beyond the froth carrying surface
of the tray to provide raised inlet weirs of uniform height as shown in Figure 1. The crest height is
superimposed on a substantial depth of froth fixed by the
weir height and any variation in crest height will be a
small fraction of the total froth height. The froth
height and the concomitant pressure drop are virtually
uneffected by variations in liquid loading and therefore
far higher loadings are obtainable than possible with
trays such as conventional cross flow trays.

As a general rule, adequate froth height control
will be achieved with the multiple downcomer trays
by providing between about 1.0 and _____

- 13 -

5.0 feet of downcomer inlet length per square foot of total tray area. If loading is so low that less than about 1.0 foot of downcomer inlet length can serve a square foot tray of area efficiently, crest control, gradients, and downcomer capacity are not highly critical and can be handled reasonably well on conventional cross flow trays, perhaps assisted by vapor propulsion. On the other hand, if more than about 5.0 feet of downcomer inlet length is provided per square foot of tray area, then it is apparent that even though downcomers which make optimum use of their area are used, they still occupy a large fraction of the total tray surface; for example, 5.0 feet of downcomer inlet length per square foot of tray area provided by two inch wide downcomers results in about 40% utilization of the tray area for downcomers. More than 5.0 feet of downcomer inlet length per square foot of tray area requires very close spacing of the downcomers and leaves such a narrow width of perforated area between the downcomers that it becomes difficult to receive the liquid falling on the surface of the tray from the tray above without spilling a portion directly into the downcomers. Thus downcomer area representing 40% tray utilization is about the preferred maximum percentage to be employed in multiple downcomer trays. The lower limits on the downcomer inlet length and downcomer width also result in 7% preferred minimum percentage of the tray area occupied by the multiple downcomers.

In order to provide the requisite downcomer liquid capacity to handle the greatly increased flow rates capable of achievement with multiple downcomer trays, the width of the downcomer inlet on multiple downcomer trays should be between about 0.08 - 0.4 of the center-to-center spacing of the downcomers across the tray. Referring now to Figure 2, there is shown a sectional elevational view of portions of two adjacent vapor-liquid contacting trays constructed in accordance with the teachings of the aforementioned Bruckert patent, U.S.Patent No. 3,410,540. As shown, the adjacent trays in the contacting column are oriented such that their respective downcomer means are horizontally aligned at 90% relative to one another. In this manner, the liquid which is discharged by the downcomer means of the overlying tray falls onto the sections of the horizontally disposed tray part between adjacent downcomers on the underlying tray. Figure 2 clearly illustrates the weeping liquid penetration phenomenon which tends to occur in trays constructed in accordance with the prior art teachings. As shown, the perforated horizontal part 12 provides the active major portion of the tray surface area to support a two-phase fluid mixture of vapor in liquid for mass exchange. Each
downcomer comprises imperforate side walls 14 which define
a discrete inactive portion of the tray and provides an
inlet end section 16 for receiving a fraction of the two-
phase mixture from the adjacent section of the perforated horizontal part 12 and permitting the vapor to disengage therefrom. The imperforate side walls 14 also provide an outlet
end section 18 for collecting the liquid disengaged from such
two phase mixture and discharging the disengaged liquid 21
from the tray. Each downcomer further consists of an outlet means 20 which controls discharge of disengaged liquid.
Visual observation of the internal operation of a vapor-
liquid contacting column employing trays as shown in Figure
2 has shown that the momentum of the falling disengaged
liquid 21 when added to the hydrostatic head of froth on
the tray surface of the underlying tray is sufficient to
overcome the dry plate pressure drop of the rising gas so
that a substantial quantity of liquid passes in streams 22
directly through the perforated horizontal part 12 prior to
any significant gas-liquid contacting. Such liquid weeping
involves bypassing of the liquid on the underlying tray and
contributes to lowered tray efficiency. This is
because, as shown in Figure 2, the liquid in the discharged
streams 21 from the outlet means of the downcomer of the
overlying tray passes directly through the froth on the

- 16 -

underlying tray and issues in the streams 22 from the latter tray, so that such liquid is not involved in the intimate gas-liquid contacting operation which is occurring on the perforated horizontal part sections of the underlying tray.

Figure 3 shows a perspective view of two superimposed vapor-liquid contacting trays constructed in accordance with the present invention, such as may be usefully employed to overcome the deleterious weeping behavior as shown in Figure 2, described above. Trays 100 and 101 in Figure 3 are vapor-liquid contacting trays of a type employed in a contacting column wherein a plurality of such trays are vertically spaced apart from one another for effecting contact between a rising vapor and liquid flowing across the horizontally disposed part 12 of the tray to liquid downcomer means 10 extending through the horizontal part. The horizontal part 12 has main top and bottom surfaces with a plurality of openings 6 distributed across the surfaces and extending through the horizontal part for vapor flow therethrough. The downcomer means of tray 100 are arranged to discharge liquid onto liquid impingement area portions 30 of the horizontal part main top surface of the underlying tray 101 in the contact-int column As shown, a plurality of slot means 31 is distributed across the liquid impingement area portions 30 of the tray horizontal part main top surface to provide vapor flow for prevention of weeping of impinging liquid, discharged from downcomer means of an overlying tray, through the horizontal part openings in the liquid impingement area portions 30 of the tray horizontal part 12.

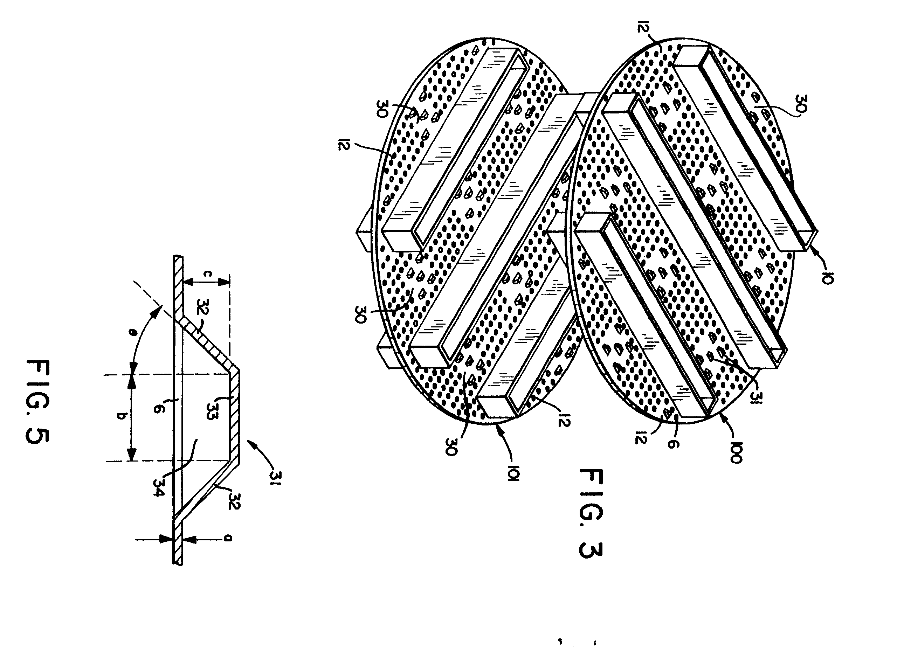

The constructional details of the slot means employed in the Figure 3 embodiment are shown more clearly in Figures 4 and 5. As shown, each of the slot means 31 substantially overlies a fixed size opening 6 through the tray horizontal part and has a top surface 33 raised from the main top surface of the tray horizontal part. As shown in this embodiment, top surface 33 is substantially parallel to the main top surface of the tray horizontal part. Two spaced-apart edge sections 33a, 33b of the raised top surface 33 are separated from the main top surface, each forming a slot opening 34 therewith. As shown, slot opening 34 is of elongated shape and has greater width than height; such configuration is preferred from a standpoint of ease of fabrication when the slot means are punched from the tray horizontal part and promotes good froth stability on the main top surface of the tray horizontal part in the liquid impingement area portions thereof. Side wall means 32 bound the slot openings and join the top surface 33 of the slot means to the main top surface of the tray horizontal part 12, such that the raised top surface 33 and side wall means 32 together bridge the overlaid fixed size opening through the horizontal part and provide flow communication for vapor flow from the overlaid fixed size opening through the slot openings of the slot means, whereby liquid discharged from the downcomer means of an overlying tray in the contacting column and impinging onto the liquid impingement area portions 30 of the tray horizontal part main top surface is imparted with horizontally directed vapor thrust by vapor issuing from the slot openings of the slot means, to prevent weeping of liquid through the fixed sized openings in the liquid impingement area portions of the tray horizontal part.

Referring to Figure 5, the slot opening 34, as mentioned, may suitably have a width (minimum width = b) which is greater than the height c of the slot opening. In general, the height of the slot opening c should be substantially larger than the thickness (= a) of the perforated horizontal part, in order to allow sufficient passage of gas through the slot opening for vapor flow. The angle $\theta$ formed by the side wall means 32 and a perpendicular from an edge of the raised top surface 33 may suitably lie within the range of from 0° to 60°. The slot means shown in Figures 4 and 5 may be formed integral with the tray plate member, as for example may be effected by a punching operation or, alternatively, the slot means may be formed from separate structural components joined to the tray horizontal part main top surface over the overlaid fixed size opening therein. In the slot means shown in Figures 4 and 5, the raised top surface 33 of the slot means is rectangular in shape and the aforementioned edge sections of the slot means correspond to the longitudinal edges of the rectangular top surface, with the transverse edges of the rectangular top surface being joined to the side wall means, whereby the slot means forms two opposed, parallel slot openings transversely spaced apart from one another.

In the vapor-liquid contacting tray of this invention, the tray horizontal part has main top and bottom surfaces with a plurality of openings distributed across such surfaces and extending through the horizontal part for vapor flow therethrough. In the liquid impingement area portions of the tray horizontal part, these openings are of fixed size as employed in conjunction with the slot means of this invention. In the remaining portions of the horizontal part, i.e., the non-impingement areas, the openings are preferably also of fixed size, but may be of variable size, as for example may be provided by valve means of a type coventionally used and well known to those skilled in the art.

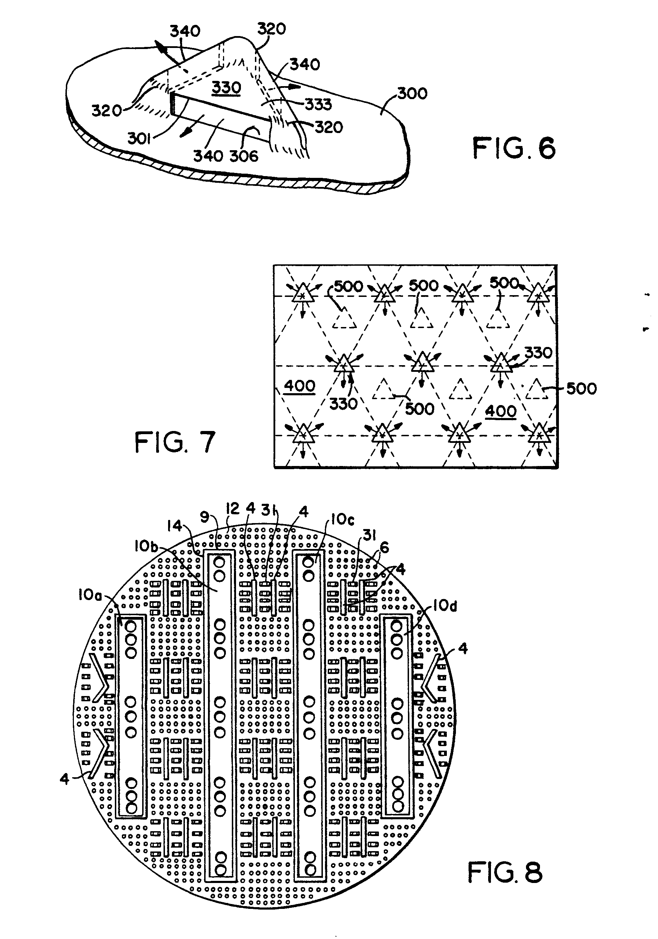

Figure 6 shows another embodiment of a slot means such as may usefully be employed in the practice of the present invention. The slot means 330 overlies a fixed size opening 306 through the horizontal part and has a top surface 333 raised from the main top surface 300.

Three spaced-apart edge sections 301 of the raised top surface 333 are separated from the main top surface 300 each forming a slot opening 340 therewith. Side wall means 320 bound the slot openings and join the top surface 333 of the slot means 330 to the main top surface 300, such that the raised top surface and side wall means together bridge the overlaid fixed size opening through the horizontal part and provide flow communication for vapor flow from the overlaid fixed size opening through the slot openings of the slot means. In this embodiment, the raised top surface 333 of the slot means is triangular in shape and the edge sections correspond to portions of each of the side edges of the triangular top surface. The apex edges of the triangular top surface are joined to the side wall means, whereby the slot means forms three slot openings circumferentially spaced apart from one another.

Figure 7 shows one preferred pattern of the triangular slots of Figure 6 on a portion of tray deck (tray horizontal part). The pattern of slot means 330 on the tray deck can be viewed as being formed by an array of equilateral triangles 400. Each slot means 330 is located at the apex of 6 adjacent triangles and as a result, the gas issuing from each slot opening is opposed by the gas issuing from the slot openings of two adjacent slot means. In this configuration, the open area of the tray horizontal part can be varied by either changing _____

- 21 -

the height or width of the slot openings, thereby enlarging the slot openings, or by altering the size of the equilateral triangles forming the slot pattern.  An alternative pattern is also shown in the drawing of Figure 7 by inclusion of the triangular slot means shown in dotted line representation.  In the alternative pattern, the triangular slot means are also located in the center of alternating equilateral triangles and provide a somewhat more compact slotting pattern on the liquid impingement area of the tray horizontal part top surface.

When the slot means of the present invention are employed in a vapor-liquid contacting tray of the multiple downcomer type, the surface area of the horizontal part is preferably between 50 and 90% of the cross-sectional area of the tray, with the remainder of the cross-sectional area of the tray being constituted by downcomer means. At horizontal part surface area values of less than 50%, the downcomer means become  so closely spaced together that it is difficult to receive the liquid falling onto the surface of the tray horizontal part from the tray above without spilling a portion directly into the downcomer means.  A horizontal part surface area values of about 90%, the horizontal part surface area becomes so large relative to the downcomer area that single

11448

downcomers may be usefully employed. Although the slot means of the present invention have been described particularly in application to trays of the multiple downcomer type, it will be recognized that their utility is not so limited, and that the slot means of the present invention may be usefully employed on other conventional type trays, such as cross flow trays having downcomers which are arranged to discharge liquid onto liquid impingement area portions of the horizontal part main top surface of an underlying tray in a contacting column. In the general practice of the invention, the open area of the openings in the tray horizontal part will generally be in the range of from 1 to 20% of the surface area of the horizontal part. Open area values above 20% are not generally employed due to their associated low pressure drop which prevents a suitably high froth height from being maintained on the tray horizontal part and leads to excessively high degree of weeping over the entire horizontal part surface.

Although the slot means of this invention have been described above as being distributed across the liquid impingement area portions of the tray horizontal part main top surface, the liquid impingement area portions being the areas of liquid impingement of the liquid discharged from downcomer means of an overlying tray in a contacting column, it will be recognized that in some applications it may be desirable to distribute such slot means across the entire horizontal part main top surface such that the slot means overlie all of the (fixed size) openings thereon. On the other hand, it may be desirable to distribute the slot means only across the liquid impingement area portions of the horizontal part top surface. In the latter instance, wherein the slot means are distributed only across the liquid impingement area portions of the tray horizontal part main top surface, with the remainder of the horizontal part main top surface having a plurality of fixed size openings distributed thereacross.it may be desirable in many instances to maintain the percent open area of the horizontal part substantially constant across its full extent, so that any small zone on a tray has the same percent open area as any other zone. When employing slot means in just the liquid impingement areas of the horizontal part main top surface, however, it is necessary to adjust the total open area of the slot means to account for the difference in the orifice coefficients between the two geometries (i.e., fixed size perforation openings and slot openings) by the following equation:

$$A_A = (C_P/C_A) \, A_P$$

wherein

$A_A$ = % open area of the slot openings on the liquid impingement area portions of the horizontal part main top surface, as based on the surface area of the horizontal part:

- 24 -

$C_p$ = orifice coefficient of the openings on the remaining portions of the tray horizontal part main top surface:

$C_A$ = orifice coefficient of the slot openings on the liquid impingement area portions of the tray horizontal part main top surface; and

$A_p$ = % open area of the openings on the remaining portions of the horizontal part main top surface, as based on the surface area of the horizontal part.

In accordance with this relationship between the open area of the slot openings on the liquid impingement area portions of the tray horizontal part main top surface and the open area of the openings on the remaining portions of the tray horizontal part main top surface, the flow of gas through the open area over all sections of the tray may be kept substantially uniform.

Figure 8 is a plan view of a vapor-liquid contacting tray constructed in accordance with the present invention. The contacting tray includes four narrow, trough-like downcomer means 10a, 10b, 10c and 10d evenly spaced across the tray in parallel relation to each other and extending through the horizontal part 12 as the sole liquid transfer means and comprising a minor portion of the tray

- 25 -

surface area such that the horizontal part is divided into
sections of substantially equal surface area per unit length
of adjacent downcomer means. The horizontal part 12 has
main top and bottom surfaces with a plurality of
openings 6 distributed across such surfaces and extending through the plate member for vapor flow therethrough.  A plurality of slot means 31 are distributed
across the liquid impingement area portions of the tray
horizontal part main top surface to provide vapor flow for
prevention of weeping of impinging liquid,discharged from
downcomer means of an overlying tray,through the fixed size
openings in the liquid impingement area portions of the tray
horizontal part.  In connection with the use of slot means
distributed across the liquid impingement area portions of
the tray horizontal part main top surface, the tray is pro-
vided with a number of vertically upwardly extending guide
wall members 4 joined at a lower edge to the main top surface of the horizontal part, to direct the flow of
liquid on the main top surface and avoid liquid maldistribution thereon.  As shown, the guild wall members 4 are disposed in the liquid impingement area portions of the tray
horizontal part main top surface, but such wall members may
be deployed on any portion of the tray horizontal part main
top surface.  The function of the guide wall members in the
Figure 8 embodiment is to channel the liquid impinging on the liquid impingement areas of the perforated horizontal part and conduct such flow of liquid to the non-impingement areas of the horizontal part main top surface. In this manner, the froth height of the liquid dispersion on the tray main top surface is made substantially uniform and loss of gas-liquid contacting efficiency attributable to liquid maldistribution on the tray surface is avoided.

The advantages of the present invention will be shown more fully by the example set forth below.

## EXAMPLE

In this example, a number of multiple downcomer vapor-liquid contacting trays were evaluated for penetrative weeping, including trays constructed in accordance with the prior art and trays constructed in accordance with the present invention. Each of the vapor-liquid contacting trays had a downcomer configuration which was similar to that shown in Figure 8 herein, with each tray having 4 downcomers, a tray diameter of 5300 mm, a tray thickness of 2.5 mm, a downcomer center-to-center distance of 1173 mm, a downcomer length for the smaller peripheral downcomers of 3472 mm and a downcomer length for the larger central downcomers of 4578 mm. Each of the downcomers had a width of 152 mm and a height of 160 mm, including a height above the perforated horizontal part of the tray of 51 mm. Each of the trays had a percent open area of 18.22%, based on the total surface area of the horizontal part.

In the evaluation, six tray configurations were tested, as designated trays 1 - 6 below. Trays 1 and 2 featured a horizontal part having a plurality of fixed size openings distributed across the surfaces thereof and extending through the horizontal part for vapor flow therethrough, but without the provision of any slot means according to the present invention. The diameter of the fixed size perforation openings distributed across the horizontal part was 6.35 mm. Trays 1 and 2 were identical in configuration, except that tray 2 was provided with a plurality of vertically upwardly extending guide wall members joined at a lower edge to the main flat top surface of the horizontal part, in a pattern similar to that shown in Figure 8 herein. Trays 3 and 4 were provided with a plurality of slot means distributed across the restricted liquid impingement area portions of the tray horizontal part main top surface. The slot means on these trays were of a type such as is shown in Figures 4 and 5 herein, with a slot opening height of 3.25 mm, a slot opening upper width of 12 mm and a slot opening lower width of 18.5 mm, with side wall means bounding the slot opening and being oriented with respect to the tray horizontal part at an angle of 45°. The slot means in trays 3 and 4 were oriented to cause

- 28 -

vapor flow parallel to the sides of the tray downcomers and were transversely staggered. The slots were located in just the impingement areas of the discharged liquid and their open area was adjusted by the factor 1.15; as a result, the percent open area in the impingement areas was 20.95% while the percent open area of the remaining perforated tray was 18.22 percent. Trays 3 and 4 were identically constructed, with the exception that tray 4 had a plurality of vertically upwardly extending guide wall members joined at a lower edge to the main top surface of the horizontal part in the impingement areas, such as shown in Figure 8 herein. Trays 5 and 6 were slotted with the same type slots as trays 3 and 4, except that in the former case the slot means were oriented to cause vapor flow perpendicular to the sides of the tray downcomers and were transversely staggered. Trays 5 and 6 were identically constructed, except that tray 6 was provided with a plurality of vertically upwardly extending guide wall members joined at a lower edge to the main top surface of the horizontal part in the liquid impingement areas, such as shown in Figure 8 herein.

During the test evaluation, liquid penetrative weeping was measured for each of the aforementioned trays 1 - 6 in air-water contacting service. In operation, air was supplied to the test tray by an air blower at a volumetric flow rate of 1310.29 feet$^3$/sec., and water was supplied at a volumetric rate of 6.756 cu. ft. /sec. To measure the rate of penetrative weeping, a funnel was located beneath one of the liquid impact area portions of the tray horizontal part and penetrating liquid was collected in a 45-gal. drum. The value of collected penetrating liquid was used to project an overall penetrative weeping rate by direct proportioning.

The results of the evaluative testing are shown below in Table I.

### TABLE I

#### WEEPING MEASUREMENTS ON VAPOR-LIQUID CONTACTING TRAYS

| Tray type | Guide Wall Members | % Weeping |
|-----------|--------------------|-----------|
| 1. Perforated horizontal part - no slot means | No | 8.95 |
| 2. Perforated horizontal part - no slot means | Yes | 10.68 |
| 3. Slotted horizontal part; vapour flow parallel to side of tray downcomers | No | 3.38 |
| 4. Slotted horizontal part; vapour flow parallel to side of tray downcomers | Yes | 4.39 |

11448

TABLE I (Continued)

WEEPING MEASUREMENTS ON VAPOR-LIQUID
CONTACTING TRAYS

| Tray type | Guide Wall Members | % Weeping |
|---|---|---|
| 5. Slotted horizontal part;vapour flow perpendicular to side of tray downcomers | No | 2.95 |
| 6. Slotted horizontal part;vapour flow perpendicular to side of tray downcomers | Yes | 4.32 |

In comparing test trays 1, 3 and 5, it is seen that the provision of slot means constructed in accordance with the present invention result in a significant reduction in the percent penetrative weeping measured on the test trays as compared to the prior art test tray 1 having no slot means disposed thereon. In comparing test trays 3 and 5, it is to be noted that test tray 5, constructed with slots oriented perpendicular to the side of the tray downcomer, affords a small degree of improvement relative to tray 3, which employed slots oriented parallel to the side of the tray downcomer. The reduction in penetrative weeping afforded by the slot means of the present invention can be characterized by two distinct functional aspects. First, the downward momentum component of the flowing liquid discharged from the downcomer means of the overlying tray is dissipated by the raised top surface of the slot means. Thus, the liquid is prevented from freely passing through the overlaid fixed size opening. Secondly, liquid on the tray plate member near the slot means is horizontally displaced by the kinetic energy of the vapor emitted from the slot openings. In this manner, the hydrostatic head of liquid on the tray in the liquid impingement area portions of the tray horizontal part is maintained at a suitably low level.

A comparison of test trays 1 and 2, 3 and 4 and 5 and 6 shows that the use of guide wall members to overcome liquid maldistribution on the tray surface aggrevates the penetrative weeping problem. Because the use of guide wall members increases the liquid residence time on most of the tray area, a correspondingly greater opportunity exists for liquid to pass through the horizontal part perforations especially in the downcomer discharged liquid impact area. As a result, it becomes all the more important, when guide wall members are employed, to curtail as much of the weeping as possible without creating countervailing effects. By utilizing the slot means of the present invention in the downcomer liquid discharge impact area, such weeping can be significantly curtailed.

Although preferred embodiments have been described in detail, it will be appreciated that other embodiments are contemplated only with modification of the disclosed features, as being within the scope of the invention.

11448

WHAT IS CLAIMED IS:

1. In a vapor-liquid contacting tray, of a type employed in a contacting column wherein a plurality of such trays are vertically spaced apart from one another, for effecting contact between a rising vapor and liquid flowing across a horizontally disposed part of the tray to liquid downcomer means extending through such horizontal part, said horizontal part having main top and bottom surfaces with a plurality of openings distributed across said surfaces and extending through said horizontal part for vapor flow therethrough, and said downcomer means being arranged to discharge liquid onto liquid impingement area portions of the horizontal part main top surface of an underlying tray in s aid contacting column, the improvement comprising a plurality of slot means distributed across said liquid impingement area portions of the tray horizontal part main top surface to provide vapor flow for prevention of weeping of impinging liquid, discharged from downcomer means of an overlying tray, through said openings in said liquid impingement area portions of the tray horizontal part, each said slot means substantially overlying a fixed size opening through said horizontal part and having a top surface raised from said main_____

- 1 -

top surface, with at least two spaced-apart edge sections
of said raised top surface separated from said main
top surface each forming a slot opening therewith and side wall means bounding said slot openings and
joining the top surface of the slot means to said tray
horizontal part main top surface, such that said raised
top surface and side wall means together bridge the overlaid fixed size opening through said horizontal part and
provide flow communication for vapor flow from said overlaid fixed size opening through the slot openings of said
slot means, whereby liquid discharged from the downcomer
means of an overlying tray in said contacting column and
impinging onto the liquid impingement area portions of the
tray horizontal part main top surface is imparted with
horizontally directed vapor thrust by vapor issuing
from the slot openings of said slot means, to prevent
weeping of liquid through said fixed size openings
in said liquid impingement area portions of the tray
horizontal part.

2. A vapor-liquid contacting tray according
to claim 1 wherein said raised top surface of said slot
means is rectangular in shape and said edge sections
correspond to longitudinal edges of said rectangular
top surface, with transverse edges of said rectangular
top surface being joined to said side wall means, whereby
said slot means forms two opposed, parallel slot openings transversely spaced apart from one another.

3. A vapor-liquid contacting tray according
to claim 1 wherein said raised top surface of said slot
means is triangular in shape and said edge sections
correspond to portions of each of the side edges of
said triangular top surface, with the apex edges of
said triangular top surface being joined to said side
wall means, whereby said slot means forms three slot
openings circumferentially spaced apart from one another.

4. A vapor-liquid contacting tray according
to claim 1 wherein the surface area of said horizontal
part is between 50 and 90 percent of the cross-sectional
area of said tray.

5. A vapor-liquid contacting tray according
to claim 1 wherein the open area of said fixed size
openings is between 1 and 20 percent of the surface
area of said horizontal part.

6. A vapor-liquid contacting tray according
to claim 1 wherein all of said openings in said horizontal
part of said tray are fixed size openings and said slot
means are distributed across the entire horizontal part
main top surface and overlie all of said fixed size openings thereon.

7. A vapor-liquid contacting tray according to
claim 1 wherein said slot means are distributed only

- 3 -

11448

across said liquid impingement area portions of the tray horizontal part main top surface and the relationship between the open area of the slot openings on said liquid impingement area portions of the tray horizontal part main top surface and the open area of the openings in the remaining portions of the tray horizontal part is governed by the equation:

$$A_A = \frac{C_p}{C_A} \, A_p$$

wherein:

$A_A$ = percent open area of the slot openings on said liquid impingement area portions of the tray horizontal part main top surface, as based on the surface area of said horizontal part;

$C_p$ = orifice coeficient of the openings in said remaining portions of the tray horizontal part;

$C_A$ = orifice coefficient of the slot openings on said liquid impingement area portions of the tray horizontal part main top surface; and

$A_p$ = percent open area of the openings in said remaining portions of the tray horizontal part, as based. _____.

- 4 -

11448

on the surface area of said horizontal part.

8. A vapor-liquid contacting tray according to claim 1 having vertically upwardly extending guide wall members disposed thereon to direct the flow of liquid on said main top surface and avoid liquid maldistribution thereon.

9. A vapor-liquid contacting tray according to claim 1 comprising at least three narrow, trough-like downcomer means evenly spaced across the tray in parallel relation to each other and extending through said horizontal part as the sole liquid transfer means and comprising a minor portion of the tray surface area such that said horizontal part is divided into sections of substantially equal surface area per unit length of adjacent downcomer means, each downcomer means comprising (1) two spaced longitudinal inlet edges each adjacent to a section of said horizontal part, (2) imperforate relatively long and deep longitudinal side walls and imperforate relatively short transverse end walls which (a) define a discrete inactive portion of the tray surface area, (b) provide an inlet end section for receiving a fraction of a two-phase fluid dispersion and permitting vapor to disengage therefrom, and (c) provide an outlet end

- 5 -

section for collecting disengaged liquid and discharging such disengaged liquid from the tray and (3) liquid sealable outlet means which control the discharge of such disengaged liquid being contiguously associated with the lower end of said side and end walls, said outlet means having cross-sectional area smaller than said inlet end section but sufficiently large to maintain the liquid level below said inlet end.

10. A vapor-liquid contacting tray according to claim 1 wherein said slot means raised top surface is substantially parallel to said tray horizontal part main top surface and wherein each said slot opening is of elongated shape and has a greater width than height.

11. In a vapor-liquid contacting tray of a type employed in a contacting column wherein a plurality of such trays are vertically spaced apart from one another for effecting contact between a rising vapor and liquid flowing across a horizontally disposed part of the tray to liquid downcomer means, such horizontal part having main top and bottom surfaces with a plurality of openings distributed across said surfaces and extending through said horizontal part for vapor flow therethrough, with at least three narrow, trough-like downcomer means evenly spaced across the tray in parallel relation to each other and extending through said horizontal part as the sole liquid transfer means and comprising

- 6 -

a minor portion of said tray surface area such that said
horizontal part is divided into sections of substantially
equal surface area per unit length of adjacent downcomer
means, each downcomer means comprising (1) two
spaced longitudinal inlet edges each adjacent to a
section of said horizontal part, (2) imperforate relatively
long and deep longitudinal side walls and imperforate relatively short transverse end walls which (a) define a
discrete inactive portion of the tray surface area,
(b) provide an inlet end section for receiving a fraction
of a two-phase fluid dispersion and permitting vapor
to disengage therefrom, and (c) provide an outlet end
section for collecting disengaged liquid and·discharging
such disengaged liquid from the tray and (3) liquid
sealable outlet means which control the discharge of
such disengaged liquid being contiguously associated with
the lower end of said side and end walls, said outlet means
having cross-sectional area smaller than said inlet end
section but sufficiently large to maintain the liquid
level below said inlet end, and said downcomer means
being arranged to discharge liquid onto liquid impingement
area portions of the horizontal part main top surface of
an underlying tray in said contacting column, the
improvement comprising a plurality of slot means distributed across said liquid impingement area portions of the
tray horizontal part main top surface to provide vapor
flow for prevention of weeping of impinging liquid,

- 7 -

discharged from downcomer means of an overlying tray, through said openings in said liquid impingement area portions of the tray horizontal part, each said slot means substantially overlying a fixed size opening through said horizontal part and having a top surface raised from said main top surface, with at least two spaced-apart edge sections of said raised top surface separated from said main top surface each forming a slot opening therewith and side wall means bounding said slot openings and joining the top surface of the slot means to said tray horizontal part main top surface, such that said raised top surface and side wall means together bridge the overlaid fixed size opening through said horizontal part and provide flow communication for vapor flow from said overlaid fixed size opening through the slot openings of said slot means, whereby liquid discharged from the downcomer means of an overlying tray in said contacting column and impinging onto the liquid impingement area portions of the tray horizontal part main top surface is imparted with horizontally directed vapor thrust by vapor issuing from the slot openings of said slot means, to prevent weeping of liquid through said fixed size openings in said liquid impingement area portions of the tray horizontal part.

FIG. 1

FIG. 2

FIG. 4

FIG. 3

FIG. 5

FIG. 6

FIG. 7

FIG. 8

# DOCUMENTS CONSIDERED TO BE RELEVANT

| Category | Citation of document with indication, where appropriate, of relevant passages | Relevant to claim |
|---|---|---|
| - | <u>DE - A - 1 542 481</u> (STAGE)<br>* fig. 2, position 2 and 3 in connection with page 1, paragraph 3 *<br>-- | 1 |
| - | <u>DE - A - 1 667 184</u> (MESSER GRIESHEIM)<br>* fig. 6 *<br>-- | 1,2,6,<br>10,11 |
| - | <u>GB - A - 1 460 709</u> (G.G. HASELDEN)<br>* page 1, lines 81 to 93 *<br>-- | 1,11 |
| - | <u>GB - A - 1 449 278</u> (VYZKUMNY USTAV CHEMICKYCH ZARIZENI BRNO)<br>* fig. 5 and 9 *<br>-- | 2,3,<br>10,11 |
| - | <u>DE - A - 2 554 789</u> (KRASNODARSKIJ POLITECHNITSCHESKIJ INSTITUT)<br>* position 7 *<br>-- | 8 |
| - | <u>US - A - 2 926 754</u> (E.G. RAGATZ)<br>* fig. 2 *<br>-- | 8 |
| D | <u>US - A - 3 410 540</u> (UNION CARBIDE)<br>* fig. 1 and 10 *<br>--  ./.. | 9,11 |

**CLASSIFICATION OF THE APPLICATION (Int. Cl.²)**

B 01 D 3/22
B 01 D 3/20

**TECHNICAL FIELDS SEARCHED (Int.Cl.²)**

B 01 D 3/20
B 01 D 3/22

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons
&: member of the same patent family, corresponding document

| X | The present search report has been drawn up for all claims | |
|---|---|---|
| **Place of search** Berlin | **Date of completion of the search** 12-01-1979 | **Examiner** KÜHN |

EPO Form 1503.1  06.78

**European Patent Office**

| | DOCUMENTS CONSIDERED TO BE RELEVANT | | CLASSIFICATION OF THE APPLICATION (Int. Cl.²) |
|---|---|---|---|
| Category | Citation of document with indication, where appropriate, of relevant passages | Relevant to claim | |
| A | DE - A - 2 305 565 (SHELL)<br>* complete document *<br><br>-- | | |
| A | FR - A - 2 190 510 (INSTITUT FRANÇAIS DU PETROLE)<br>* complete document *<br><br>-- | | |
| A | US - A - 2 973 189 (I.C. CHU)<br>* complete document *<br><br>-- | | TECHNICAL FIELDS SEARCHED (Int. Cl.²) |
| A | US - A - 3 958 964 (SIEMENS)<br>* position 48 and 49 *<br><br>---- | | |

EPO Form 1503.2  06.78